# EUROPEAN PATENT APPLICATION

(11) **EP 1 528 503 A1**
(43) Date of publication of application: **04.05.2005**
(21) Application number: 03741275.6
(22) Date of filing: 08.07.2003
(51) Int. Cl.: G06K 17/00, G06F 3/033

(54) **INPUT DEVICE**

(30) Priority: 08.08.2002 JP 2002231851
(71) Applicant: Sony Corporation, Tokyo 141-0001 (JP)
(72) Inventor: INABA, Takeshi, c/o Sony Corporation, Shinagawa-ku, Tokyo 141-0001 (JP)
(74) Representative: Müller, Frithjof E., Dipl.-Ing.
(86) International application number: PCT/JP2003/008665
(87) International publication number: WO 2004/015622

(57) **Abstract**

An input device is provided in which a variety of IC cards having different functions is receivable. The input device includes a body (21) to be connected by an interconnecting cable (30) to an information processing apparatus (2) and which includes controls (23 to 25) to control the information processing apparatus (2), an IC card receptacle (27) for an IC card (7), formed contiguously to an IC card insertion slot (26) formed at the rear end of the device body (21) and through which the IC card (7) is introduced into the IC card receptacle (27), and a cover member (22) installed pivotably to the device body (21) to open and close an operating surface (21a) of the device body (21).

## Description

### Technical Field

The present invention relates to an input device capable of supplying a command signal to a host apparatus and in which an IC card being a feature expansion module for the host apparatus can be set.

This application claims the priority of the Japanese Patent Application No. 2002-231851 filed on August 8, 2002, the entirety of which is incorporated by reference herein.

### Background Art

Conventionally, a keyboard, mouse, ten-key pad, joystick or the like is connected as an input device to a connector of an information processing apparatus such as a personal computer to supply signals to the information processing apparatus. In addition to the above-mentioned input device, an adapter unit in which an IC card or the like is removably set can be connected to the connector of the information processing apparatus.

The IC card is used as a feature expansion module for the information processing apparatus. Currently, there is available a variety of such modules having different functions. The IC cards include a memory IC card and fingerprint recognition IC card, for example. Having built in the body thereof a flash memory as a semiconductor memory element, the memory IC card works as an external storage unit for the information processing apparatus to store data processed by the information processing apparatus. Also, the fingerprint recognition IC card has provided on the main side thereof a fingerprint extraction unit on which the fingertip is to be pressed. The fingerprint recognition IC card compares a fingerprint extracted by the fingerprint recognition unit from the fingertip with fingerprint data stored in a memory, and allows the user or owner of the fingerprint recognition IC card to access a specific information processing apparatus or a specific file or the like only when the comparison shows that the extracted fingerprint coincides with one of the fingerprint data in the memory.

Normally, the information processing apparatus is provided with only a limited number of connectors for connection of peripheral devices. Therefore, no new adapter unit can additionally be connected to any of the connectors of the information processing apparatus. On this account, the input devices for use with the information processing apparatus include a mouse having also the function of such an adapter unit, that is, a one with an IC card receptacle. In this type of mouse, the IC card receptacle is provided in the mouse body in addition to an operation block provided for selecting a desired one of items or choosing a command on a display screen. Each of various types of IC cards can be set in the IC card receptacle of the mouse. However, since the profiles and interfaces of such IC cards, except for unique-functional portions, are unified, so a plurality of IC cards of different functions can removably be set in the IC card receptacle of the mouse.

The IC cards having different functions are different in shape of the unique-functional portion thereof from one to another. For example, the fingerprint recognition IC card and memory IC card are similar in profile, outside dimensions, interface and the like to each other but they are partially different from each other. Namely, the fingerprint recognition IC card has a fingerprint detector provided on one main side thereof, while the memory IC card has attached on the main side thereof a label on which its stored content is written down.

On this account, the mouse should be designed so that the user can easily identify any IC card set in the IC card receptacle thereof, can easily use the set IC card and can also operate the mouse smoothly without being disturbed by the set IC card.

### Disclosure of the Invention

Accordingly, the present invention has an object to overcome the above-mentioned drawbacks of the related art by providing a novel and improved input device.

The present invention has another object to provide an input device having an IC card receptacle designed to accept any of IC cards of different functions and prevent the set IC card from disturbing the operability of the input device.

The present invention has yet another object to provide an input device having an IC card receptacle designed for the user to readily identify the type of an IC card set in the IC card receptacle.

The present invention has still another object to provide an input device having an IC card receptacle formed therein to receive a fingerprint recognition IC card which permits easy fingerprint recognition.

The above object can be attained by providing an input device including according to the present invention:
a device body to be connected to a host apparatus and including controls to control the host apparatus to which the device body is connected;
an IC card receptacle formed in the device body contiguously to an IC card insertion slot provided at a side of the device body;
a cover member provided over one main side of the device body to open and close the main side; and
an interface for data transfer between an IC card set in the IC card receptacle and the host apparatus.

These objects and other objects, features and advantages of the present invention will become more apparent from the following detailed description of the best mode for carrying out the present invention when taken in conjunction with the accompanying drawings.

### Brief Description of the Drawings

FIG. 1 is a perspective view of an information processing system in which the mouse according to the present invention is used.
FIG. 2 is a perspective view of the mouse according to the present invention.
FIG. 3 is a perspective view of the mouse according to the present invention, with the cover member provided on the device body being in a pivoted position.
FIG. 4 is an exploded perspective view of the mouse.
FIG. 5 is a perspective view of the connector member built in an IC card receptacle formed in the mouse, with no IC card yet inserted in the IC card receptacle.
FIG. 6 is a perspective view of the connector member, with an IC card inserted in the IC card receptacle.
FIG. 7 is a perspective view of an ejecting member built in the connector.
FIG. 8 is a side elevation of the ejecting member with no IC card yet inserted in the IC card receptacle.
FIG. 9 is a side elevation of the ejecting member with an IC card inserted in the IC card receptacle.
FIG. 10 is a perspective view of the mouse in which an fingerprint detection IC card is set, showing the user making a fingerprint registration or recognition.
FIG. 11 is a perspective view of the mouse into which a memory IC card is going to be inserted.
FIG. 12 is a block diagram of an information processing apparatus and an adapter unit connected to the information processing apparatus.
FIG. 13 is a block diagram of an fingerprint recognition IC card.
FIG. 14 shows a flow of operations made in the information processing apparatus with the fingerprint recognition IC card being set in the IC card receptacle.
FIG. 15 also shows a flow of operations made for fingerprint registration and recognition in the fingerprint recognition IC card.
FIG. 16 is a block diagram of a memory IC card.
FIG. 17 shows a flow of operations made for data read or write in the memory IC card.

### Best Mode for Carrying Out the Invention

The present invention will be described in detail below concerning the information processing system using the input device according to the present invention with reference to the accompanying drawings.

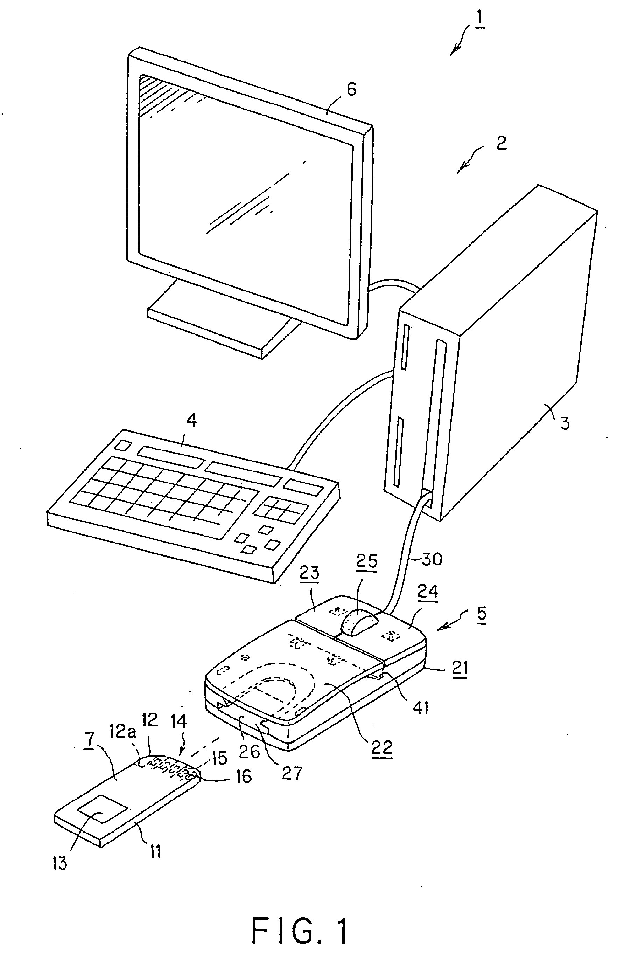

As shown in FIG. 1, the information processing system, generally indicated with a reference number 1, includes an information processor 2. The information processor 2 is a stationary or portable personal computer including a main unit 3 having built therein a hard disk drive for storage of various programs and processing data, an ROM (read-only memory) having a control program and the like stored therein, a RAM (random access memory) to which a program and processing data are loaded and a CPU (central processing unit) for controlling the entire system, a keyboard 4 connected to the computer main unit 3 to supply the latter with characters, symbols, etc., a mouse 5 according to the present invention, which is used to select items or choose commands on a display screen, and a display unit 6 connected to the computer main unit 3 and composed of a CRT (cathode ray tube), LCD (liquid crystal display) or the like to display the processing data or the like. The computer main unit 3, keyboard 4 and display unit 6 are connected to one another by cable or air. More specifically, they are connected to one another by an interface such as IEEE (Institute of Electrical and Electronic Engineers) 1394, USB (universal serial bus), RS (recommended standard) 232 or the like. Especially, the mouse 5 is connected to the computer main unit 3 by the USB interface. Of course, the mouse 5 may be connected to the computer main unit 3 by any other appropriate interface such as IEEE 1394, IEEE 802, PS/2 (Personal System/2) or the like.

The mouse 5 connected to the computer main unit 3 has an IC card 7 set therein. The IC card 7 is a fingerprint recognition IC card or a memory IC card, for example. More specifically, the fingerprint recognition IC card 7 includes a generally rectangular card body 11 being a casing formed by molding a synthetic resin. The card body 11 has built therein a printed wiring board having mounted thereon a fingerprint detection sensor and one or multiple semiconductor elements in which a control circuit and the like are formed. The card body 11 is chamfered at one front-side corner thereof (indicated with a reference number 12) for discrimination of a direction in which the user is to insert the IC card into an IC card receptacle in the mouse 5. On the rear-side opposite to the chamfered front-side corner 12, there is a concavity 12a. The chamfered corner 12 and concavity 12a provide a position limiter for the IC card 7 going to be inserted into the IC card receptacle in the mouse 5. Also, the card body 11 has provided on the upper rear side thereof a fingerprint detector 13 to which the user is to press the fingertip for detection of the user's fingerprint. The card body 11 has formed at one short-side end thereof, namely, at the front lower side, a terminal block 14 including a plurality of contacts 16. The terminal block 14 extends from the front end of the card body 11 at which the IC card 7 is first inserted into the IC card receptacle of the mouse 5 to the bottom. In the terminal block 14, each of the plurality of contacts 16 is provided on the bottom surface of each of engagement concavities 15 defined by partitions. That is, each contact 16 is protected because it is provided on the bottom of the engagement concavity 15. Also, the engagement concavity 15 is open at the front end and bottom of the card body 11. A connecting terminal provided in the IC card receptacle of the mouse 5 is to come into the engagement concavity 15 as the IC card 7 is inserted into the IC card receptacle. When each contact 16 is pressed to a corresponding connecting terminal, they are electrically connected to each other. That is, the IC card 7 is electrically connected to the mouse 5.

Note that the IC card 7 set in the mouse 5 as above may be a memory IC, an IC card with an image pickup device such as CCD (charge-coupled device), an IC card with GPS (global positioning system), an interface IC card for a radio communication such as Bluetooth or the like in addition to the fingerprint detection IC. Namely, the function of the IC card is not limited to any special one.

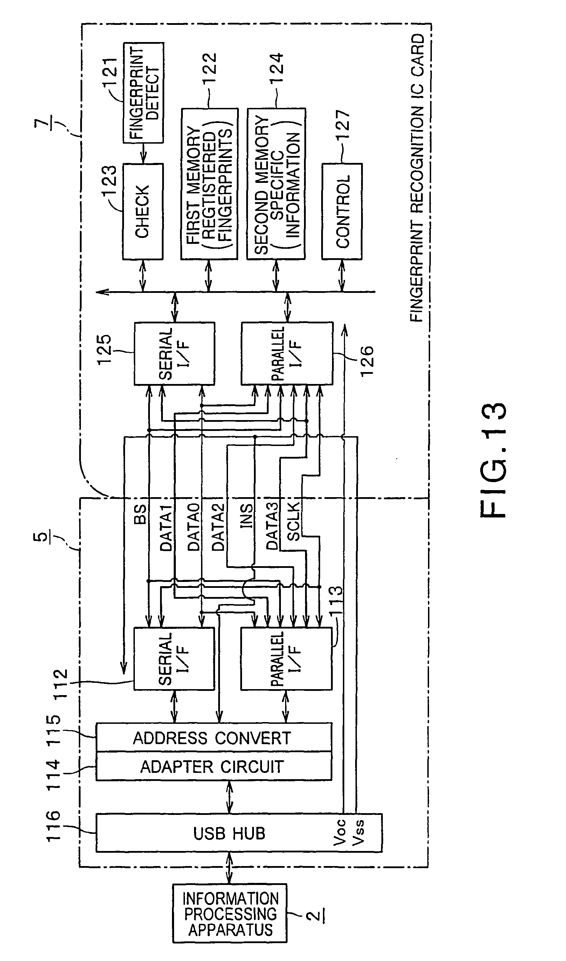

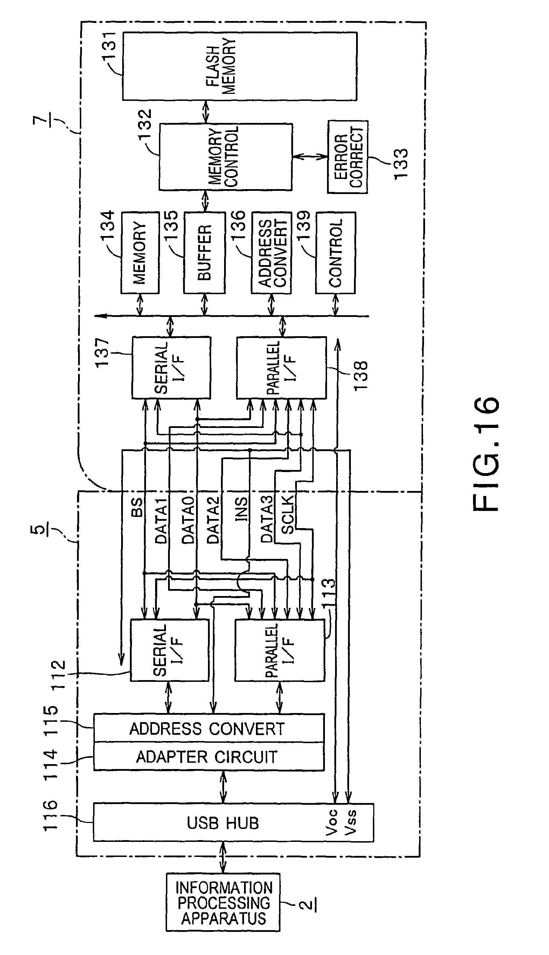

The IC cards 7 that can be set in the IC card receptacle of the mouse 5 include two types of which one is of a serial data transfer type and the other is of a parallel data transfer type. In both the two types of IC cards 7, the terminal block 14 includes ten contacts 16 as shown in FIGS. 13 and 16. In the parallel transfer type IC card 7, the first and tenth contacts are used as Vss contacts. They are connected to each other and also to internal power lines, the second contact is a bus state (BS) signal contact for both serial transfer and parallel transfer. The third contact is to have a first data line (DATA1) for the parallel transfer connected thereto. The fourth contact is to have a data line for the serial transfer and data line (DATA0) for the parallel transfer connected thereto, the fifth contact is to have a second data line (DATA2) for the parallel transfer connected thereto, and the seventh contact is to have a third data line (DATA3) for the parallel transfer connected thereto. Further, the sixth contact is to be connected to the intermediate point between the first and tenth contacts for Vss to detect an IC card 7 set, a clock signal line (SCLK) is to be connected to the eighth contact, and an internal power line (Vcc) is to be connected to the ninth contact.

In the serial transfer type IC card, the fifth and seventh contacts are auxiliary ones, and the third contact is to have the internal power line (Vcc) connected thereto.

Further, the serial transfer type IC cards include an IC card with, and a one without, a function to make conversion between an logical address in data processing and physical address in a flash memory. With the IC card having the logical-physical address converting function being set in the mouse 5, the computer main unit 3 will access the IC card by a logical address via the mouse 5, and the IC card 7 access the flash memory through conversion of a logical address into a physical address. With the IC card without the logical-physical address converting function being set in the mouse 5, when the computer main unit 3 will access the IC card 7 by a logical address, the mouse 5 convert the logical address into a physical address, and the IC card 7 access the flash memory by the physical address.

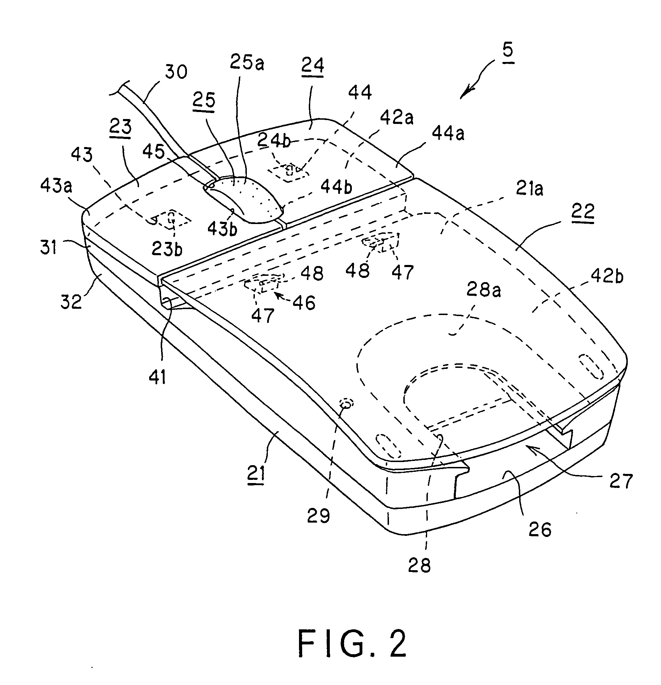

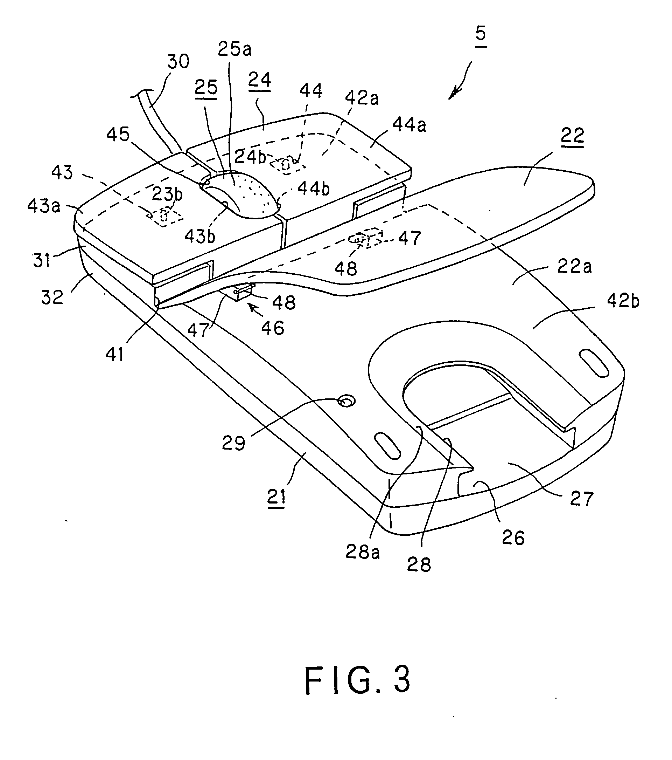

Next, the mouse 5 in which the aforementioned IC card 7 is to be set will be illustrated and explained. As shown in FIGS. 2 and 3, the mouse 5 consists of a body 21 forming a casing of the mouse 5 itself and a cover member 22. The mouse body 21 has an operating side 21 a on one main side thereof, and the cover member 22 is provided over the operating side 21a.

The operating side 21a of the mouse body 21 has provided on the front portion thereof first and second controls 23 and 24 juxtaposed with each other in the direction of mouse width and each of which is to be pressed by the user's fingertip. Also, as a third control 25, a wheel 25a is provided between the first and second controls 23 and 24. The mouse body 21 has provided at the rear end thereof an IC card insertion slot 26 through which the IC card 7 is to be introduced. Further, the mouse body 21 has provided therein contiguously to the IC card insertion slot 26 an IC card receptacle 27 into which the IC card 7 is to be set. The IC card receptacle 27 is exposed to outside through a U-shaped opening 28 contiguous to the IC card insertion slot 26. Thus, the type of an IC card 7 set in the receptacle 27 can visually be checked through the opening 28. For example, when a fingerprint recognition IC card 7 is set in the IC card receptacle 27 through the IC card insertion slot 26, the fingerprint detector 13 on the IC card 7 is exposed to outside through the U-shaped opening 28. When a memory IC card 7 is set in the IC card receptacle 27 through the IC card insertion slot 26, the label for write-down of the title of stored data or the like is exposed to outside through the U-shaped opening 28. In addition, a pilot lamp 29 is provided near the U-shaped opening 28. This pilot lamp 29 lights while the IC card 7 is being accessed.

The cover member 22 is provided on the mouse body 21 to open and close the operation surface 21a. More specifically, the cover member 22 is to open and close the U-shaped opening 28 through which the IC card 7 set in the IC card receptacle 27 is exposed to outside. The cover member 22 is formed from a transparent material, for example, a clear synthetic resin so that the user can visually check an IC card 7 set in the IC card receptacle 27. For example, with a fingerprint recognition IC card 7 being set in the IC card receptacle 27, the cover member 22 is pivoted to uncover the U-shaped opening 28 as shown in FIG. 3 so that the user can press the fingertip on the fingerprint detector onto the IC card 27 exposed to outside through the U-shaped opening 28. Also, the U-shaped opening 28 is flanked with a border 28a (descending from the operating side 21a) curved to permit easier access of the user's fingertip to the fingerprint detector exposed in the opening 28 and easier view into the opening 28.

Note that an interconnecting cable 30 with a USB plug is led out from the front end of the mouse body 21 for connecting the mouse 5 to the computer main unit 3 of the information processing apparatus 2.

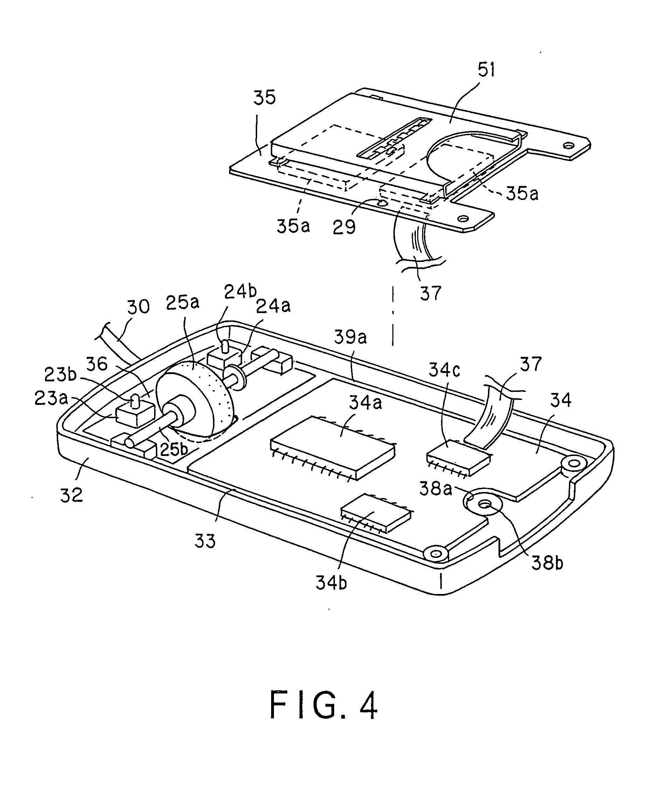

The mouse body 21 forming the casing of the mouse 5 consists of an upper half 31 and lower half 32. The upper and lower halves 31 and 32 are formed by injection molding of a rigid synthetic resin such as ABS (acrylonitrile butadiene styrene) to have a generally rectangular shape when they are combined with each other. The lower half 32 has defined inside itself a parts-mounted area 33 in which there are disposed first to third printed wiring boards 34, 35 and 36 as shown in FIG. 4.

The first printed wiring board 34 is disposed on the bottom surface of the lower case 32, and has mounted thereon an optical sensor 34a included in a detector which detects a moved direction and distance of the mouse 5, a mouse-dedicated microcomputer chip 34b included in a mouse controller which generates, based on a signal supplied from the optical sensor 34a or the like, a command signal for supply to the computer main unit 3 of the information processing apparatus 2, a hub chip 34c having formed therein a hub to control input and output of a signal to and from the IC card 7, input and output a command signal to and from the mouse 5, etc. It should be noted that the first printed wiring board 34 has connected thereto one end of the connecting cable 30 for connection to the computer main unit 3.

The second printed wiring board 35 is disposed above the first printed wiring board 34, and has a connector 51 for connection of the IC card 7, mounted on the side thereof opposite to the upper half 31 of the mouse body 21, and an adapter chip 35a, in which an adapter circuit for control of data input and output to and from the IC card 7 is formed and the like, on the side thereof opposite to the first printed wiring board 34. That is, the second printed wiring board 35 has mounted thereon necessary parts for access to the IC card 7. The connector 51, adapter chip 35a and the like mounted on the second printed wiring board 35 are electrically connected by a flexible printed wiring board 37 to the hub chip 34c etc. mounted on the first printed wiring board 34.

As shown in FIG. 4, the third printed wiring board 36 is disposed on the front portion of the lower half 32 of the mouse body 21, and has mounted thereon parts forming the controls 23, 24 and 25. The parts include first and second switching elements 23a and 24a of a push-switch type, a rotation detecting element 25b for detecting the rotated and turn of the wheel 25a, etc. The first push switch-type switching element 23a is for use with the first control 23, the second push-switch type switching element 24a is for use with the second control 24, and the rotation detecting element 25b is for use with the third control 25. Further, the third printed wiring board 36 may have mounted thereon a push-switch type switching element (not shown) for detecting that the user has pressed the wheel 25a. The third printed wiring board 36 is electrically connected by a flexible printed wiring board to the first printed wiring board 34. Outputs from the first and second switching elements 23a and 24a and the rotation detecting elements 25b are supplied to the mouse-dedicated microcomputer chip 34b on the first printed wiring board 34. The microcomputer chip 34b will generate a command signal for supply to the computer main unit 3 of the information processing apparatus 2.

As shown in FIG. 4, the first printed wiring board 34 has a plurality of positioning concavities 38a formed in the perimeter thereof and which are to be engaged with positioning projections 38b formed on the lower half 32 of the mouse body 21. Being thus positioned, the first printed wiring board 34 is disposed on the bottom of the lower half 32, and secured by welding or the like to the bottom of the lower half 32. Further, the second printed wiring board 35 electrically connected to the first printed wiring board 34 and flexible printed wiring board 37 is laid over the first printed wiring board 34 disposed on the bottom of the lower half 32. More particularly, the second printed wiring board 35 is supplied on a board support 39a formed on the side wall or the like of the lower half 32 of the mouse body 21 with a predetermined clearance above the first printed wiring board 34, and fixed by welding or the like to the lower half 32. Also, the third printed wiring board 36 has positioning holes formed therein. It is positioned with the positioning holes being aligned with holes formed in the positioning projections or the like on the bottom of the lower half 32, and similarly secured by welding or the like to the lower half 32.

The upper half 31 of the mouse body 21 is fixed by welding, screwing or the like to the lower case 32 having the first to third printed wiring boards 34, 35 and 36 disposed in the parts-mounted area 33 as above. The upper half 31 provides the operating side 21 a of the mouse body 21. The upper half 31 has formed at the rear end thereof the insertion slot 26 for the IC card 7. Also, the upper half 31 has formed in the generally central portion of the width at the rear portion thereof the U-shaped opening 28 through which the IC card 7 in the IC card receptacle 27 is exposed to outside. The pilot lamp 29 is provided near the U-shaped opening 28 and it is illuminated by a light emitting element such as LED (light emitting diode) mounted on the second printed wiring board 35.

As shown in FIGS. 2 and 3, the operating side 21a of the upper half 31 of the mouse body 21 has a width-directional recess 41 formed at a portion thereof rather near the front end of the upper surface 21a. The first to third controls 23, 24 and 25 are provided on a front portion 42a, in relation to the recess 41, of the operating side 21a. The front portion 42a has formed therein a first opening 43 through which an activator 23b of the first switching element 23a is exposed to outside, a second opening 44 through which an activator 24b of the second switching element 24a is exposed to outside, and a third opening 45 through which the wheel 25a as the third control 25 is exposed to outside. The first control 23 consists of a first operating plate 43a formed from the same light-transparent material as that of the cover member 22 which will be described in detail later, the second control 24 consists of a second operating plate 44a formed from the same light-transparent material as that of the cover member 22, and the third opening 45 through which the wheel 25a as the third control 25 is exposed to outside is defined by cuts 43b and 44b formed in the edges, opposite to each other, of the first operating plate 43a and second operating plate 44a, respectively. Each of the first and second operating plates 43a and 44a is mounted via an elastic piece (not shown) to the upper half 31 of the mouse body 21. When the first operating plate 43a or second operating plate 44a is pressed by the user's fingertip or the like, it can press the activator 23b of the first switching element 23a or the activator 24b of the second switching element 24a.

In a rear portion 42b, in relation to the recess 41, of the operating side 21a, there are provided the U-shaped opening 28 through which the IC card 7 set in the IC card receptacle 27 is exposed to outside and the pilot lamp 29. The cover member 22 covering the rear portion 42b of the operating side 21a is pivotably installed to the upper half 31 of the mouse body 21. The cover member 22 is formed from a light-transparent material so that the IC card 7 set in the IC card receptacle 27 can be viewed by the user from outside even when the cover member 22 is closed to the mouse body 21. The cover member 22 is installed pivotably by a pair of hinges 46 to the operating side 21a of the upper half 31 in the vicinity of the recess 41. The cover member 22 is curved at the whole surface thereof to permit the user to easily hold the mouse 5.

Each of the hinges 46 in pair is composed of a pivot support 47 provided near the recess 41 of the upper half 31 and a spindle 48 provided at the base end of the cover member 22. The pivot support 47 has formed in the inner side thereof opposite to that of the other support 47 a pivot bore in which the spindle 48 is inserted. The cover member 22 supported pivotably on the pivot supports 47 can be pivoted vertically by holding the free end thereof, namely, the end thereof at the insertion slot 26 for the IC card 7. Of course, the pivot bore in the hinge 46 may be formed at the cover member 22 and the spindle 48 may be provided at the upper half 31.

Note that the cover member 22 is provided not to close the insertion slot 26 for the IC card 7, formed in the upper half 31 of the mouse body 21. An IC card with an image pickup device has an imaging element provided at the rear portion thereof, and an IC card with GPS or radio communication interface IC card 7 has an antenna provided at the rear portion thereof. Even if such an IC card is set in the IC card receptacle 27, the imaging element or antenna has to be exposed to outside the mouse body 21. Also, the insertion slot 26 should always be open to outside for easy insertion and removal of the IC card 7.

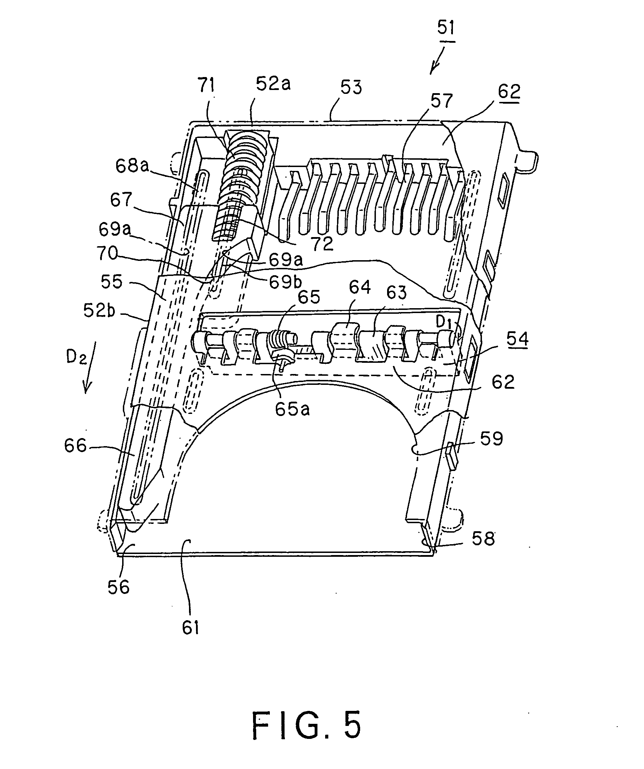

Note that the connector 51 for connection of the IC card 7, mounted on one side of the aforementioned second printed wiring board 35, forms a part of the IC card receptacle 27 in the mouse body 21. The connector 51 is constructed as will be described in detail below with reference to FIGS. 5 to 9. The connector 51 consists of a base 52 forming a part of the IC card receptacle 27 for the IC card 7, a cover 53 installed over the base 53, a lid assembly 54 which closes the IC card insertion slot for the IC card 7, and an ejecting member 55 for ejection of the IC card 7 from inside the IC card receptacle 27.

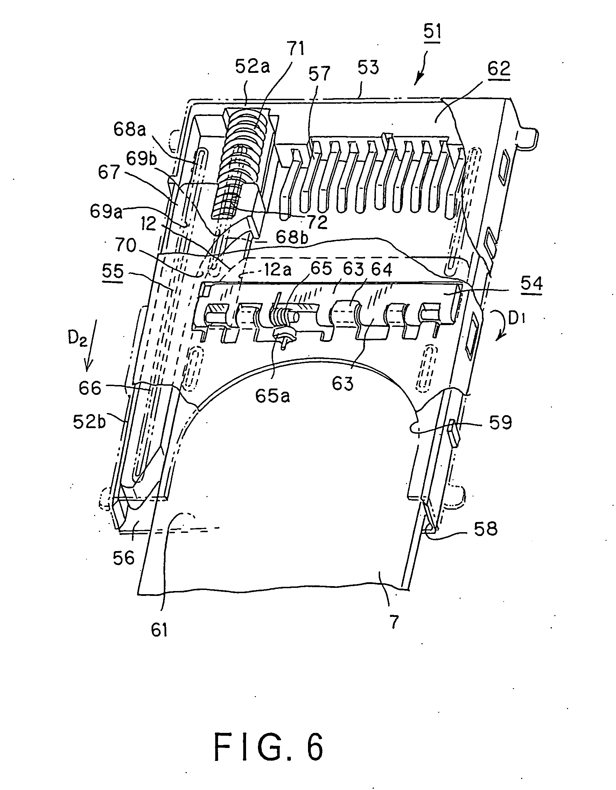

As shown in FIGS. 5 and 6, the base 52 forms a part of the IC card receptacle 27 for the IC card 7, and has provided at the rear end thereof connecting terminals 57 which are to be engaged on the terminal block 14 provided at the front end of the IC card 7. The connecting terminals 57 are equal in number to the contacts 16 of the terminal block 14, and more specifically they count ten in this embodiment. Each of the connecting terminals 57 is formed from an elastic electrically conductive piece. When the IC card 7 is set in the IC card receptacle 27, the connecting terminals 57 are engaged in the corresponding engagement concavities 15 in the terminal block 14 and elastically put into contact with the contacts 16, respectively. Thus, the IC card 7 is held in place in the IC card receptacle 27.

The cover 53 installed to the base 52 is formed by bending a sheet metal or the like, and it is assembled to the base 52 to define a compartment 61 for housing the IC card 7. The cover 53 also defines along with the base 52 an IC card insertion opening 58 for the IC card 7 at the side thereof opposite to that where the connecting terminals 57 are provided. The cover 53 has formed therein a generally U-shaped opening 59 contiguous to the IC card insertion opening 58. The U-shaped opening 59 is provided correspondingly to the U-shaped opening 28 in the upper half 31 of the mouse body 21 to hide the cover 53 against visibility from outside.

The cover 53 has installed at the middle thereof the lid assembly 54 which prevents foreign matter such as dust from coming into the compartment 61 for the IC card 7, especially, to near the connecting terminals 57. The lid assembly 54 is integrally composed of a lid 62 to close the compartment 61, and a pivot 63 pressed by the front end of the IC card 7 to pivot the lid 62. On the other hand, the cover 53 has a pivot holder 64 through which the pivot 63 is penetrated. With the pivot 63 penetrated through the pivot holder 64, the lid 62 is installed to stay inside the compartment 61. With the coil portion of a helical torsion spring 65 being wound on the pivot 63 and one arm of the helical torsion spring 65 being engaged on an engagement portion 65a of the cover 53 while the other arm is engaged on the lid 62, the lid assembly 54 is forced in the direction of arrow D₁ in FIG. 5 to close the compartment 61. When no IC card 7 is inserted in the compartment 61, the lid assembly 54 is forced by the helical torsion spring 65 and thus closes the compartment 61 to prevent foreign matter such as dust from coming into the compartment 61. When the IC card 7 is inserted from the IC card insertion opening 58 into the compartment 61, the lid assembly 64 is pushed by the front end of the IC card 7 as shown in FIG. 6 and pivoted in a direction opposite to the direction of arrow D₁ in FIG. 6 against the force of the helical torsion spring 65, and thus the terminal block 14 is put into contact with the connecting terminals 57. That is, when the IC card 7 is inserted, the lid 62 is pivoted about the pivot 63 supported pivotably in the pivot holder 64 until it is generally parallel to the cover 53.

Further, there is provided one side, parallel to the directions in which the IC card 7 is inserted and ejected, of the compartment 61 defined by the base 52 and cover 53 an ejecting member 55 to eject the IC card 7 from inside the compartment 61, as shown in FIGS. 5 and 6. The ejecting member 55 is formed to have a generally L shape to have a long movement guide portion 66 and a short movement limiting portion 67. The ejecting member 55 is movable in the direction of arrow D₂ in which the IC card 7 is ejected and in a direction opposite to the direction of arrow D₂ in which the IC card 7 is inserted, as shown in FIGS. 5 and 6. The movement guide 66 has formed therein a guide recess 69a projecting along the moving direction of the IC card 7 on the base 52 and in which a guide projection 68a is engaged.. It should be noted that the movement limiting portion 67 has also formed therein a guide recess 69b projecting along the moving direction of the IC card 7 on the base 52 and in which a guide projection 68b is engaged.

The movement limiting portion 67 is positioned to be generally perpendicular to the direction in which the IC card 7 is inserted, and has a positioning portion 70 formed on a surface thereof which the IC card 7 is to abut. The positioning portion 70 is engaged on the chamfered corner 12 and concavity 12a of the IC card 7. That is to say, the ejecting member 55 positions the IC card 7 by means of a surface of the movement guide portion 66 opposite to the side of the IC card 7 and positioning portion 70 of the movement limiting portion 67. With the IC card 7 being pressed, the ejecting member 55 is guided by the guide projections 68a and 68b and guide recesses 69a and 69b in moving in the direction opposite to the direction of arrow D₂ in FIGS. 5 and 6. Also, between the movement limiting portion 67 and rear wall 52a of the base 52, there is provided a helical compression spring 71 which forces the ejecting member 55 in the direction of arrow D₂ in FIGS. 5 and 6 in which the IC card 7 is ejected. The helical compression spring 71 is engaged at one end thereof in a concavity 72 in the movement limiting portion 67 and thus limited in position.

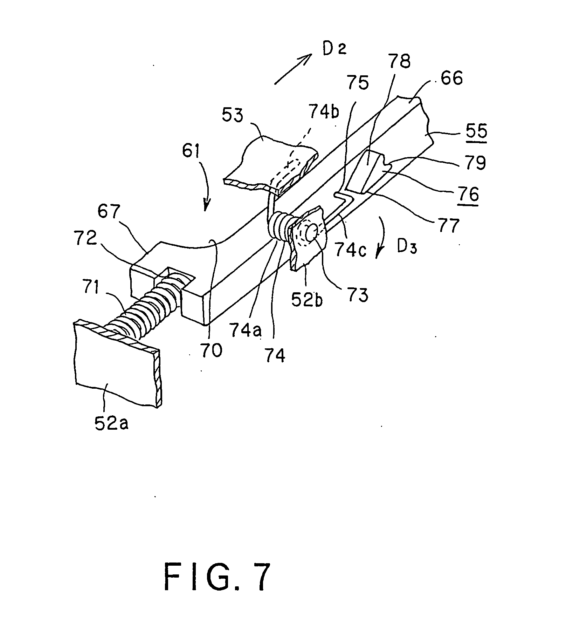

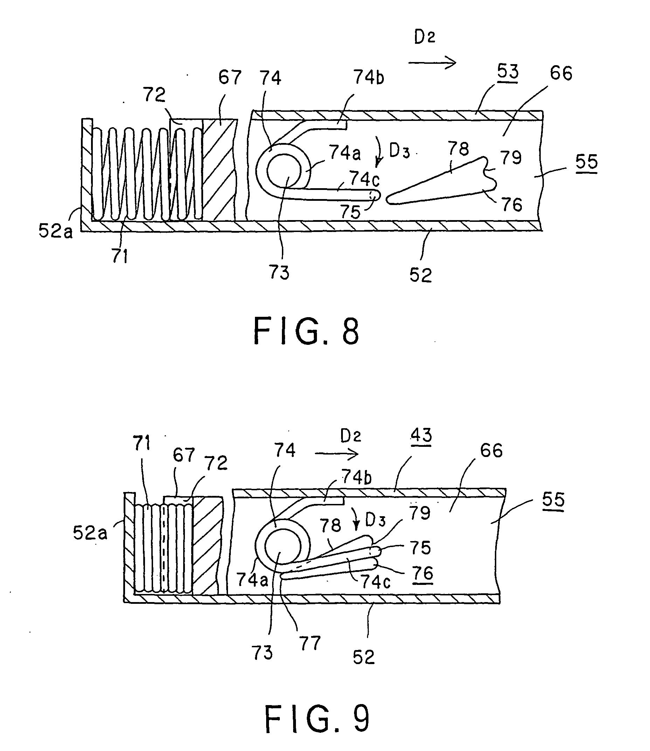

As shown in FIGS. 7 to 9, a projection 73 is provided on one side wall 52b of the base 52 to project inwardly and has a control spring 74 fixed thereto. The control spring 74 is a helical torsion spring whose coil portion 74a wound on the projection 73 and rests at one end 74b thereof on the cover 53 to force the other end 74c to the base 52 in the direction of arrow D₃ in FIG. 9. The other end 74c of the control spring 74 is bent at an angle of about 90° inwardly to form an engagement portion 75. The engagement portion 75 is to be engaged on a catching projection 76 formed integrally with the movement guide portion 66 of the ejecting member 55.

The catching projection 76 is formed to have a generally isosceles triangle, and provided integrally on the surface of the movement guide portion 66 of the ejecting member 55 at the side of the side wall 52b of the base 52 so that an apex 77 of the catching projection 76 is positioned somewhat lower than the engagement portion 75 of the control spring 74 wound on the projection 73 on the side wall 52b of the base 52. On the surface of the catching projection 76 at the side of the cover 53, there is formed a cam portion 78 having a slope which forces up the engagement portion 75 of the control spring 74. The cam portion 78 is formed ascending from the apex 77 toward the cover 53. Also, in a portion of the catching projection 76 opposite to the apex 77, there is formed an engagement concavity 79 in which the engagement portion 75 of the control spring 74 is to be engaged.

When no IC card 7 is inserted in the connector 51, the engagement portion 75 of the control spring 74 is not engaged in the engagement concavity 79 in the engagement projection 76 as shown in FIGS. 7 and 8. Therefore, the ejecting member 55 is forced by the helical compression spring 71 in the direction of arrow D₂ in FIGS. 7 and 8 and an IC card 7 can be inserted into the connector 51.

When an IC card 7 is inserted first at the terminal block 14 thereof into the compartment 61 while the ejecting member 55 is in the position in which the IC card 7 can be inserted, the front end thereof is positioned in place by the movement limiting portion 67 and positioning portion 70 of the ejecting member 55 as shown in FIG. 6. As the IC card 7 is further pressed, it is guided by the guide projections 68a and 68b and guide recesses 69a and 69b in moving in the direction opposite to the direction of arrow D₂ in FIGS. 7 and 8 against the force of the helical compression spring 71.

Then, the engagement portion 75 of the control spring 74 moves from the apex 77 to the engagement concavity 79 along the cam portion 78 of the catching projection 76 provided integrally with the movement guide portion 66 of the ejecting member 55 against the force in the direction of arrow D₃ in FIGS. 8 and 9. When the engagement portion 75 of the control spring 74 has completely moved over the cam portion 78, it is engaged into the engagement concavity 79 in the catching projection 76 under the force of the control spring 74 itself as shown in FIG. 9. Thus, the ejecting member 55 is held in a position where the contacts 16 forming the terminal block 14 of the IC card 7 and connecting terminals 57 will be connected to each other. The connecting terminals 57 provided on the base 52 are engaged in the engagement concavities 15 of the terminal block 14 at the IC card 7 and put elastically into contact with the contacts 16, respectively, thus electrical connection is established between the connecting terminals 67 and contacts 16. It should be noted that in this condition, the IC card 7 is generally wholly received in the IC card receptacle 27 except for a rear-side part which is exposed to outside. The rear-side part of the IC card 7 is to be pressed for ejection from inside the IC card receptacle 27.

When the above-mentioned rear-side part of the IC card 7 is pressed for ejection from the IC card receptacle 27, the ejecting member 55 is moved in the direction opposite to the direction of arrow D₂ in FIG. 9 against the force of the helical compression spring 71. Then, the catching projection 76 is disengaged from the engagement concavity 79 under the force in the direction of arrow D₃ in FIG. 9 and thus the engagement portion 75 of the control spring 74 is moved toward the side of the catching projection 76 at the side of the base 52. Because of the disengagement of the engagement portion 75 of the control spring 74 from the engagement concavity 79 of the catching projection 76, the ejecting member 55 is moved in the direction of arrow D₂ in FIG. 9 under the force of the helical compression spring 71 in a direction in which the terminal block 14 is disconnected to the connecting terminals 57, and returns to a first position where the IC card 7 is ejected. Thereafter, the IC card 7 is drawn out of the IC card receptacle 7.

For extraction from the connector 51 constructed as above, the IC card 7 has only to be pressed at the rear-side part thereof. So, the IC card 7 can easily be ejected.

In the embodiment having been described in the foregoing, the IC card ejecting mechanism permits the user to eject the IC card 7 from the IC card receptacle 27 by pressing the IC card 7 itself at the rear-side part. The ejecting mechanism may include an ejecting member which is to be operated by the user to eject the IC card 7 from inside the IC card receptacle 27.

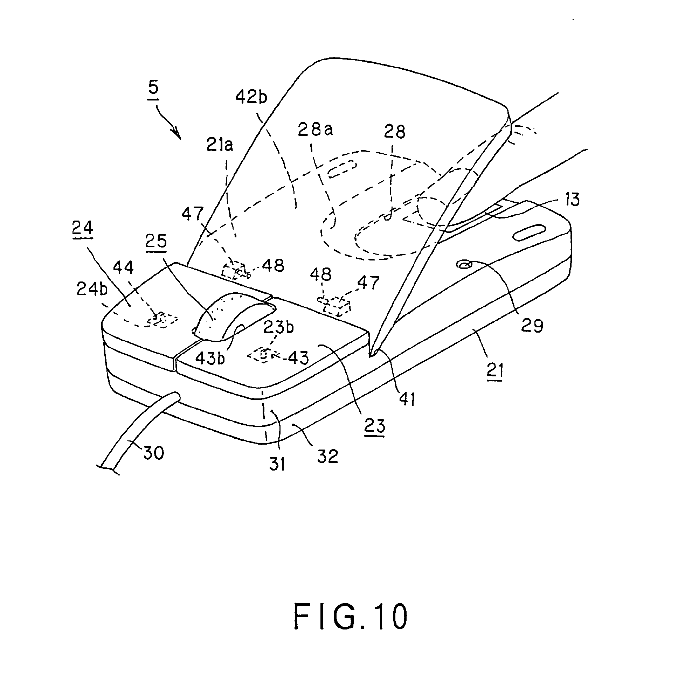

As shown in FIG. 10, the mouse 5 constructed as having been described in the foregoing is connected by the USB interconnecting cable 30 to the computer main unit 3 of the information processing apparatus 2 and can move a pointer on the display unit 6 to select items or choose commands displayed there. At the mouse 5, an IC card is inserted first at the front end thereof where there is provided the terminal block 14 into the IC card receptacle 27. When the IC card 7 inserted from the IC card insertion slot 26 is further pressed by the user, the lid 62 in the connector 51 is pressed by the front side of the IC card 7 and thus pivoted about the pivot 63 pivotably supported on the pivot holder 64 until it is generally parallel to the cover 53 as shown in FIGS. 5 and 6. The front side of the IC card 7 is positioned in place by the movement limiting portion 67 and positioning portion 70 of the ejecting member 55. Then, when the IC card 7 is further pressed, it is guided by the guide projections 68a and 68b and guide recesses 69a and 69b in moving in the direction opposite to the direction of arrow D₂ in FIGS. 7 and 8 against the force of the helical compression spring 71.

Then, the engagement portion 75 of the control spring 74 moves from the apex 77 to the engagement concavity 79 along the cam portion 78 of the catching projection 76 provided integrally with the movement guide portion 66 of the ejecting member 55 against the force in the direction of arrow D₃ in FIGS. 8 and 9. When the engagement portion 75 of the control spring 74 has completely moved over the cam portion 78, it is engaged into the engagement concavity 79 in the catching projection 76 under the force of the control spring 74 itself as shown in FIG. 9. Thus, the ejecting member 55 is held in a position where the contacts 16 forming the terminal block 14 of the IC card 7 and connecting terminals 57 will be connected to each other. The connecting terminals 57 provided on the base 52 are engaged in the engagement concavities 15 of the terminal block 14 at the IC card 7 and put elastically into contact with the contacts 16, respectively, thus electrical connection is established between the connecting terminals 67 and contacts 16.

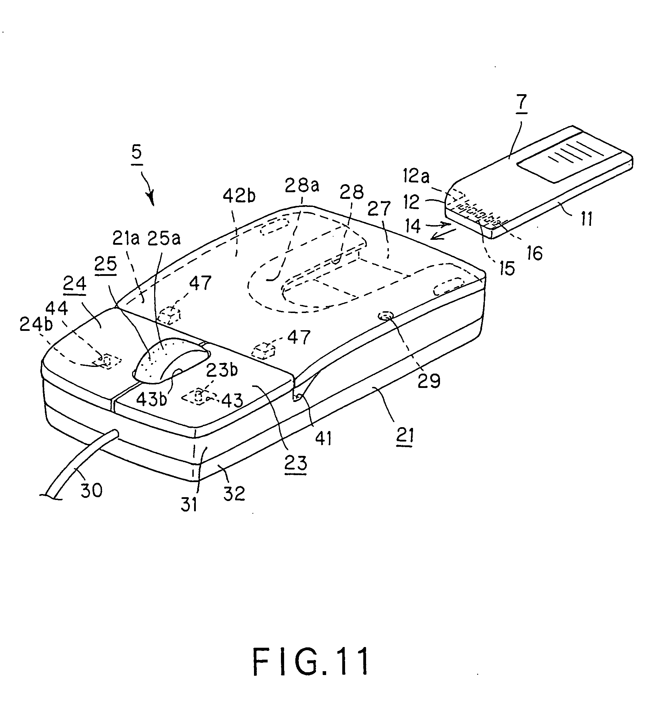

The user can view the rear side of the IC card exposed to outside through the transparent cover member 22 from the U-shaped opening 28 in the mouse body 21, and thus identify the type of an IC card 7 set in the IC card receptacle 27. It is assumed here that the user has inserted a fingerprint recognition IC card 7 into the IC card receptacle 27 for fingerprint registration or recognition and the U-shaped opening 28 is opened with the cover member 22 held open by the pair of hinges 46 installed pivotably on the mouse body 21, as shown in FIG. 10. In this condition, the fingerprint detector 13 on the IC card 7 is exposed to outside through the U-shaped opening 28. The user can press the fingertip to the fingerprint detector 13 on the IC card 7 exposed to outside through the U-shaped opening 28. When a memory IC card 7 is set in the IC card receptacle 27 of the mouse 5 as shown in FIG. 11, a label on the rear side of the IC card 7 is exposed to outside through the U-shaped opening 28 and thus the user can check data stored in the IC card 7 by viewing through the transparent cover member 22. Since the U-shaped opening 28 is formed in the mouse body 21 and the cover member 22 is formed from a light-transparent material, any one of IC cards 7 having different functions, respectively, can be inserted into the mouse 5 and an IC card 7 with any function can conveniently be used with the mouse 5.

When the above-mentioned rear-side part of the IC card 7 is pressed for ejection from the IC card receptacle 27, the ejecting member 55 is moved in the direction opposite to the direction of arrow D₂ in FIG. 9 against the force of the helical compression spring 71. Then, the catching projection 76 is disengaged from the engagement concavity 79 under the force in the direction of arrow D₃ in FIG. 9 and thus the engagement portion 75 of the control spring 74 is moved toward the side of the catching projection 76 at the side of the base 52. Because of the disengagement of the engagement portion 75 of the control spring 74 from the engagement concavity 79 of the catching projection 76, the ejecting member 55 is moved in the direction of arrow D₂ in FIG. 9 under the force of the helical compression spring 71 in a direction in which the terminal block 14 is disconnected to the connecting terminals 57, and returns to a first position where the IC card 7 is ejected. Thereafter, the IC card 7 is drawn out of the IC card receptacle 7.

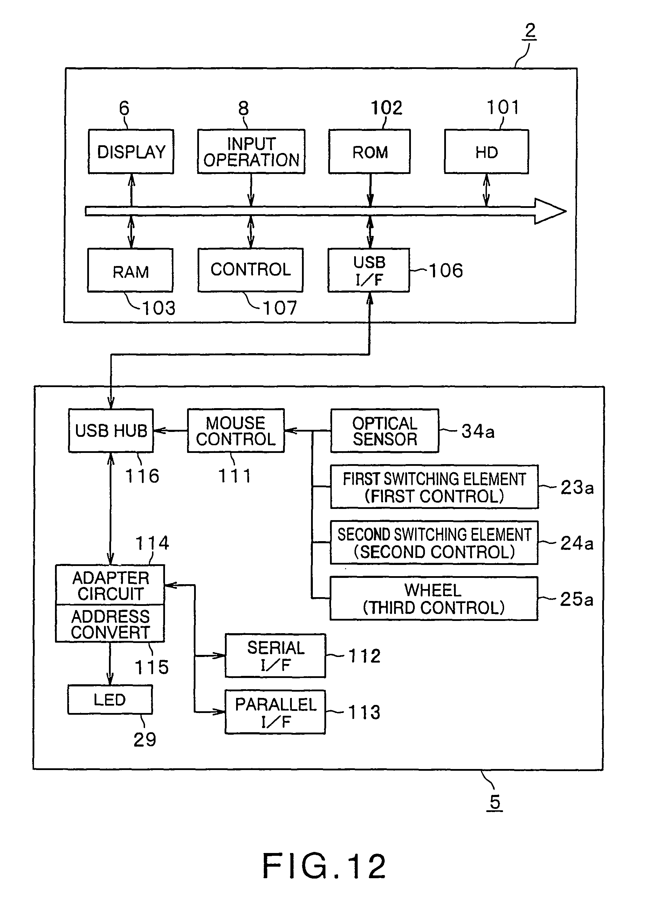

Next, the circuit configurations of the mouse 5 in which an IC card 7 is to be set and the information processing apparatus 2 to which the mouse 5 is to be connected will be described with reference to FIG. 12. First, the information processing apparatus 2 will be explained. The information processing apparatus 2 is a desk-top personal computer, notebook-sized personal computer or the like. It includes a hard disk 101 to store various programs, processing data, etc., ROM 102 having control programs etc. stored therein, RAM 103 to which a program or processing data is loaded, an input control unit 8 to supply a command signal, display unit 6 display data being processed, such as CRT, LCD or the like, USB interface 106 for making data communications with any other peripheral apparatus such as the mouse 5 according to the USB Standard, and a control unit 107 to control the system operation, such as CPU or the like. Based on a command signal supplied from the input control unit 8, the control unit 107 reads a predetermined application program from the hard disk 101 to the RAM 103 and displays it on the display unit 6 while processing data. When the user tries to access a specific computer or a specific file stored in the hard disk 101 with the mouse 5 being connected to the USB interface 106 and a fingerprint recognition IC card 7 being set in the IC card receptacle 27 of the mouse 5, the control unit 107 makes a request for authentication by fingerprint recognition and displays it on the display unit 6. Only when the control unit 107 receives authentication data indicating that the user's fingerprint has been authenticated from the IC card 7, it allows the access to the specific computer or specific file stored in the hard disk 101. Also, when a memory IC card 7 is set in the IC card receptacle 27 of the mouse 5, the control unit 107 displays data stored in the IC card 7, list of data titles, etc. on the display unit 6 so that the user can operate the information processing apparatus 2 while viewing the display unit 6.

Next, the mouse 5 to be connected to the above information processing apparatus 2 via the USB interface 106 will be described also with reference to FIG. 12. The mouse 5 includes the first switching element 23a forming the first control 23 which is to be clicked for selecting a desired item or choosing a command on the display screen, the second switching element 24a forming the second control 24 which is to be clicked for displaying an operation menu or the like on the display screen, the wheel 25a forming the third control 25 for use to scrolling the display screen, the optical sensor 34a which detects a moved direction and distance of the mouse 5, mouse controller 111 which generates a command signal for supply to the information processing apparatus 2 based on a signal supplied from the first switching element 23a, second switching element 24a or wheel 25a, and the pilot lamp 29 which lights during access to the IC card 7. The mouse controller 111 is provided on the mouse-dedicated microcomputer chip 34b or the like on the aforementioned first printed wiring board 34 for example. Also, the mouse 5 includes an serial interface 112 for serial transfer of data to and from the IC card 7 set in the IC card receptacle 27, parallel interface 113 for parallel transfer of data to and from the IC card 7 set in the IC card receptacle 27, adapter circuit 114 which adapts the interface of the IC card 7 set in the IC card receptacle 27 to USB interface, address converter 115 to convert a logical address in data processing to a physical address in the flash memory in the IC card 7 when the IC card 7 set in the IC card receptacle 27 is a memory IC card, and a hub 116 which selectively supplies either a signal from the mouse controller 111 or a signal from the adapter circuit 114 to the USB interface 106 of the computer main unit 3. The adapter circuit 114 is provided in the adapter chip 35a or the like on the aforementioned second printed wiring board 35, and the hub 116 is provided in the hub chip 34c on the first printed wiring board 34.

Supplied with a signal from the first switching element 23a, second switching element 24a or wheel 25a, the mouse controller 111 generates a command signal for supply to the computer main unit 3 via the hub 116. The optical sensor 34a includes an image input unit. Even when the user moves the mouse 5 only a little, the image input unit quickly picks up a fine image of the illuminated surface of the mouse 5 through a lens, and supplies it to the mouse controller 111. Through comparison of a plurality of images supplied from the optical sensor 34a with each other, the mouse controller 111 determines the moved distance and direction of the mouse, converts the data into an X-Y axial movement command signal, and supplies the command signal thus generated to the computer main unit 3. A pointer displayed on the display unit 6 of the information processing apparatus 2 is moved in response to the X-Y axial movement command signal.

The mouse 5 can receive each of multiple types of IC cards different in function from each other in the IC card receptacle 27, and functions also as an adapter for the IC card 7. That is, when a fingerprint recognition IC card 7 is set in the IC card receptacle 27, the adapter circuit 114 adapts the interface of the IC card 7 to USB interface for transmission of authentication data supplied from the fingerprint recognition IC card 7. When a memory IC card 7 is set in the IC card receptacle 27, the adapter circuit 114 adapts the interface of the IC card to USB interface for transmission of data supplied from the memory IC card 7 while adapting the USB interface to the interface of the IC card 7 for transmission of data supplied from the computer main unit 3 to supply the data to the memory IC card 7. When the information processing unit 2 accesses the memory IC card as above, the address converter 115 converts a logical address into a physical address. Also, while the information processing apparatus 2 is accessing the IC card 7 set in the IC card receptacle 27, the adapter circuit 114 turns on the pilot lamp 29 to inform the user that the information processing apparatus 2 is accessing the IC card 7, which is intended to prevent the user from erroneously taking out the IC card 7 from the IC card receptacle 27 while the information processing apparatus 2 is accessing the IC card 7, for example.

The information processing apparatus 2 and mouse 5 are connected to each other by an interface which can supply an electric power to the IC card 7, namely, "USB interface" in this embodiment. The USB interface can supply an electric power to a peripheral apparatus such as the mouse 5 connected to the information processing apparatus 2 as the host apparatus. It supplies a DC current of 500 mA for example from the information processing apparatus 2 to the mouse 5, whereby the pilot lamp 29 in the mouse 5 is turned on, the optical sensor 34a is driven and the IC card 7 set in the IC card receptacle 27 is powered.

Next, the circuit configuration of the IC card 7 to be set in the mouse 5 will be described. A fingerprint recognition IC card 7 will be explained with reference to FIG. 13. As shown, the fingerprint recognition IC card 7 includes a fingerprint detector 121 on which the user's fingertip is to be pressed, a first memory 122 to store a fingerprint to be registered, a fingerprint checking unit 123 to check fingerprint data supplied from the fingerprint detector 121 with registered fingerprints stored in the first memory 122, a second memory 124 to store identification (ID) data indicative of the type of an IC card 7, serial number of the IC card 7 and information related with the fingerprint registered in the first memory 122, a serial interface 125 for serial transfer of authentication data to and from the mouse 5, a parallel interface 126 for parallel transfer of authentication data to and from the mouse 5, and a controller 127 to control the system operation.

The fingerprint detector 121 includes an imaging unit consisting of a CCD (charge-coupled device), line sensor, etc., and a backlight to illuminate a surface on which a fingertip is to be pressed. When a user's fingertip is pressed to the fingerprint detector 121, the backlight is turned on and the fingerprint is captured by the imaging unit. The fingerprint detector 121 extracts features such as branches and center of a dermatoglyph from the captured fingerprint. When registering a fingerprint, the fingerprint detector 121 supplies fingerprint features to the first memory 122. Thus, the first memory 122 stores, as fingerprint data, features of a fingerprint to be registered according to each ID number. Also, when recognizing a fingerprint, the fingerprint detector 121 supplies the fingerprint data to the fingerprint checking unit 123.

For recognition of the fingerprint of a user, the fingerprint checking unit 123 checks fingerprint data supplied from the fingerprint detector 121 with the fingerprint data stored in the first memory 122 for authentication of the user. When the fingerprint data from the fingerprint detector 121 is found coincident with the fingerprint data read from the first memory 122 and thus the user is authenticated, the fingerprint checking unit 123 supplies authentication data to the serial interface 125 or parallel interface 126. If the fingerprint data from the fingerprint detector 121 is found not coincident with the fingerprint data read from the first memory 122 and thus the user is not authenticated, the fingerprint checking unit 123 supplies non-authentication data to the serial interface 125 or parallel interface 126.

The second memory 124 stores information related with the fingerprint data registered in the first memory 122. More specifically, the second memory 124 has stored therein the name and ID number of a user having registered his or her fingerprint, serial number of the IC card and the like. When the fingerprint checking unit 123 has authenticated the user, the second memory 124 supplies data on the authenticated user along with the authentication data to the serial interface 125 or parallel interface 126.

The second memory 124 has stored therein ID data for identifying an IC card 7 set in the IC card receptacle 27 as a one for parallel/serial transfer or a one dedicated for serial transfer. Further, the second memory 124 has stored therein function ID data for identifying the IC card 7 as a one for fingerprint recognition or a one for memory. When the information processing apparatus 2 accesses the second memory 124, the latter supplies the identification data first to the information processing apparatus 2 which will thus be able to identify the type of the IC card 7.

The controller 127 controls the IC card 7 as a whole. For example, when the user presses the fingertip to the fingerprint detector 121, the controller 127 drives the fingerprint detector 121, and controls write of fingerprint data for registration to the first memory 122, write and read of information related with the fingerprint data for registration to and from the second memory 124. The controller 127 selects an interface for use correspondingly to control data from the information processing apparatus 2, that is, it selects either the serial interface 125 or parallel interface 126.

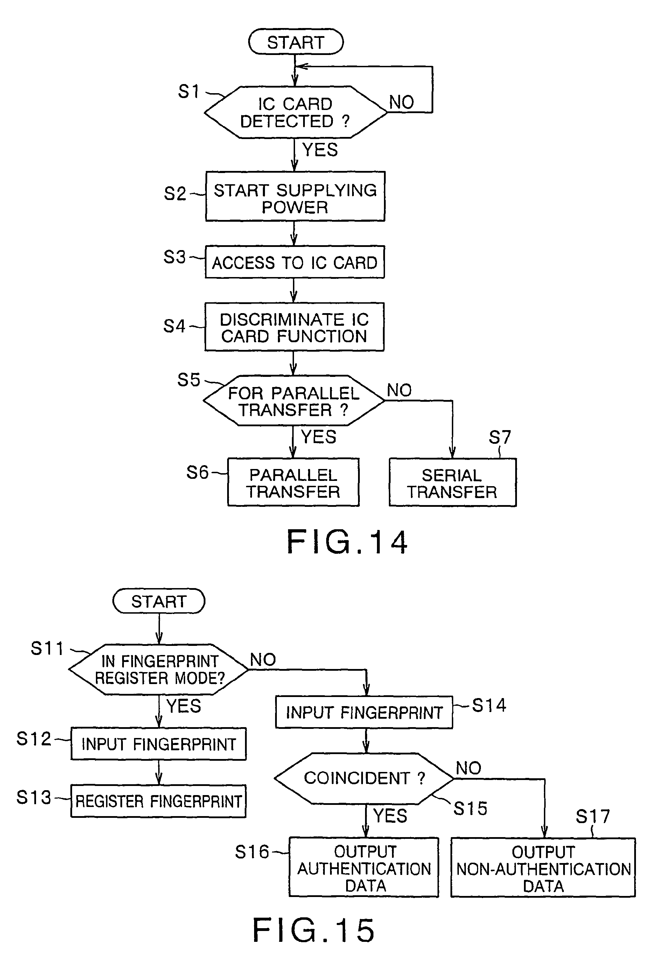

When the aforementioned fingerprint recognition IC card 7 is set in the mouse 5, the information processing apparatus 2 operates as will be described below with reference to FIG. 14. When the IC card 7 is set in the IC card receptacle 27 of the mouse 5 being connected by the USB interface to the information processing apparatus 2, the information processing apparatus 2 goes to step S1 where it will detect a potential at the IC card insertion detecting contacts and judge whether the potential is equal to that on the Vss contacts. When the potential at the IC card insertion detecting contacts is determined to be equal to that on the Vss contacts, the information processing apparatus 2 determines that the IC card is set in the IC card receptacle 27 of the mouse 5, and goes to step S2. If the potential at the IC card insertion detecting contacts is determined not to be equal to that on the Vss contacts, the information processing apparatus 2 determines that no IC card 7 is set in the IC card receptacle 27 of the mouse 5, and returns to step S1 where it will repeat the due operations.

In step S2, the information processing apparatus 2 starts supplying a power to the IC card 7 set in the mouse 5 via the interconnecting cable 30, and goes to step S3 where it will start accessing the IC card 7. At this time, supplied with the power supplied via the USB interface from the information processing apparatus 2, the pilot lamp 29 on the mouse 5 is turned on. Thus, the user can visually confirm that the access to the IC card 7 is started. Then, the information processing apparatus 2 accesses a predetermined address in the second memory 124 in the IC card 7. That is, the information processing apparatus 2 supplies a serial protocol bus state signal BS and serial clock SCLK to the IC card 7, and accesses the second memory 124 to read IC card function ID data via a data line (DATA0) used in the serial transfer and parallel transfer.

Then the information processing apparatus 2 goes to step S4 where it will judge based on the IC card function ID data read from the second memory 124 which is the IC card 7 set in the mouse 5 is, a one for fingerprint recognition or a one for memory. When the information processing apparatus 2 determines the IC card 7 set in the mouse 5 to be a fingerprint recognition one, it goes to step S5. If the information processing apparatus 5 determines the IC card 7 not to be any fingerprint recognition one, it makes operations corresponding to an IC card 7 having other function.

In step S5, the information processing apparatus 2 judges based on the communication ID data read from the second memory 124 which the IC card 7 set in the mouse 5 is, a one for parallel transfer or a one only for serial transfer. When the information processing apparatus 2 determines the IC card 7 to be for parallel transfer, it goes to step S6. If it determines the IC card 7 to be a one only for serial transfer, it goes to step S7.

Having determined the IC card 7 set in the mouse 5 to be for parallel transfer, the information processing apparatus 2 switches the interface to the parallel interface 126 by means of the controller 127 in step S6 for parallel transfer of data for subsequent operations such as fingerprint registration, check, etc. More particularly, the parallel data transfer is done along a first data line (DATA1), second data line (DATA2) and third data line (DATA3) of the parallel interface.

Having determined the IC card 7 set in the mouse 5 to be only for serial transfer, the information processing apparatus 2 switches the interface to the serial interface 125 by means of the controller 127 in step S7 for serial transfer of data for subsequent operations such as fingerprint registration, check, etc. The serial data transfer is done along the data line (DATA0).

The fingerprint recognition IC card 7 operates for fingerprint registration and check as will be described with reference to FIG. 15.

First in step S11, when the user operates the input control unit 8, the controller 127 in the IC card 7 judges whether a fingerprint register command has been supplied from the information processing apparatus 2. When the fingerprint register command has been supplied, the controller 127 goes to step S12 where it will operate for the fingerprint registration. If no fingerprint register command has been supplied, the controller 127 goes to step S14 for the fingerprint registration.

In the fingerprint registration mode, the IC card 7 is supplied with a user's finger data in step S12. More specifically, the user turns, to the rear side, the cover member 22 installed to the body 21 of the mouse 5 in which the fingerprint recognition IC card 7 is set, introduces the fingertip into the mouse 5 from the U-shaped opening 28 formed in the upper half 31 of the mouse body 21 and presses the fingertip to the fingerprint detector 121. The fingerprint detector 121 will detects the user's fingerprint. The imaging unit captures the fingerprint and extracts features such as branches and center of a dermatoglyph from the captured fingerprint to generate fingerprint data.

In step S13, the controller 127 in the IC card 7 assigns an ID number to the fingerprint data, and controls the fingerprint detector 121 to supply the fingerprint data to the first memory 122. Thus, the first memory 122 stores, namely, registers the fingerprint data on the user.

At this time, the IC card 7 will store, in the second memory 124, information related with the registered fingerprint data in association with the fingerprint data ID number. Namely, when the user enters the name and ID number of the user by operating the input control unit 8 at the information processing apparatus 2, the fingerprint IC card 7 is supplied with the input data via the serial interfaces 112 and 125 or parallel interfaces 113 and 126. Then in the fingerprint recognition IC card 7, information related with fingerprint data to be registered is recorded in association with the fingerprint data to be registered to the second memory 124 in the IC card 7.

Next, how to check a fingerprint will be described. When no fingerprint register command has been supplied to the IC card 7 in step S11, the IC card 7 will be supplied with a fingerprint of a user trying to use the information processing apparatus 2 in step S14. More specifically, when the user pivots the cover member 22 installed to the body 21 of the mouse 5 in which the fingerprint recognition IC card 7 is set to open the U-shaped opening 28, introduces the fingertip into the mouse 5 from the U-shaped opening 28 and press the fingertip to the fingerprint detector 121, the fingerprint detector 121 detects the fingertip, capture the fingerprint by the imaging unit, generates fingerprint data from the captured fingerprint and supplies the data to the fingerprint checking unit 123.

In step S15, the checking unit 123 in the IC card 7 reads registered fingerprint data from the first memory 122, and checks the fingerprint data read from the first memory 122 with fingerprint data supplied from the fingerprint detector 121. Then, when the fingerprint checking unit 123 confirms that the fingerprint data supplied from the fingerprint detector 121 coincides with the fingerprint data read from the first memory 122, the IC card 7 goes to step S16. If the result of checking is negative, the IC card 7 will go to step S17.

When the fingerprint data supplied from the fingerprint detector 121 coincides with the fingerprint data read from the first memory 122, the IC card 7 determines that the user trying to access the information processing apparatus 2 can have been authenticated, and supplies, in step S16, authentication data to the information processing apparatus 2 via the serial interfaces 112 and 125 or parallel interface 113 and 126. Having received the authentication data, the information processing apparatus 2 is ready for use by the authenticated user.

When the fingerprint data supplied from the fingerprint detector 121 does not coincide with the fingerprint data read from the first memory 122, the IC card 7 determines that the user trying to access the information processing apparatus 2 can not have been authenticated, and supplies, in step S 17, non-authentication data to the information processing apparatus 2 via the serial interfaces 112 and 125 or parallel interface 113 and 126. Having received the non-authentication data, the information processing apparatus 2 is inhibited from being used by the non-authenticated user.

In the above example, the fingerprint recognition is used to limit the user's access to the information processing apparatus 2. In addition, however, the fingerprint recognition may be used to limit any user's access to a specific file stored in an external storage unit such as a hard disk 101, an optical disk or the like, installed in the information processing apparatus 2.

Next, the memory IC card 7 compatible with the mouse 5 will be described with reference to FIG. 16. As shown, the memory IC card 7 includes a single flash memory 131 or a plurality of flash memories 131 to store data, a memory controller 132 to control write and read to and from the flash memory 131, an error correction unit 133 to add an error correction code to data stored in the flash memory 131 and decode an error correction code in data read from the flash memory 131, a memory 134 having stored therein various parameters for data write or read, a buffer memory 135 to provisionally store data for storage into the flash memory 131, an address converter 136 to make a conversion between a logical address in data processing and a physical address in the memory, a serial interface 137 to transfer data to and from the mouse 5 by serial transfer, a parallel interface 138 to transfer data to and from the mouse 5 by parallel transfer, and a controller 139 to control the system operation.

The memory 134 has stored therein ID data for identifying which an IC card 7 set in the IC card receptacle 27 is, a one for parallel/serial transfer or a one only for serial transfer. Also, the memory 134 has stored therein IC card function ID data indicative of which the IC card is, a fingerprint recognition IC card or a memory IC card. When the information processing apparatus 2 accesses the IC card 7, the memory 134 supplies the ID data first to the information processing apparatus 2 which can identify the type of the IC card 7. Further, the memory 134 has stored therein address conversion ID data indicating whether the IC card 7 includes the address converter 136 or not.

The controller 139 selects an interface used correspondingly to control data supplied from the information processing apparatus 2, namely, it selects either the serial interface 137 or the parallel interface 138.

In the memory IC card 7 constructed as above, when a logical address is supplied from the information processing apparatus 2, the controller 139 controls the address converter 136 to convert the logical address to a physical address to access the flash memory 131, and writes data to a predetermined address or reads data stored in a predetermined address.

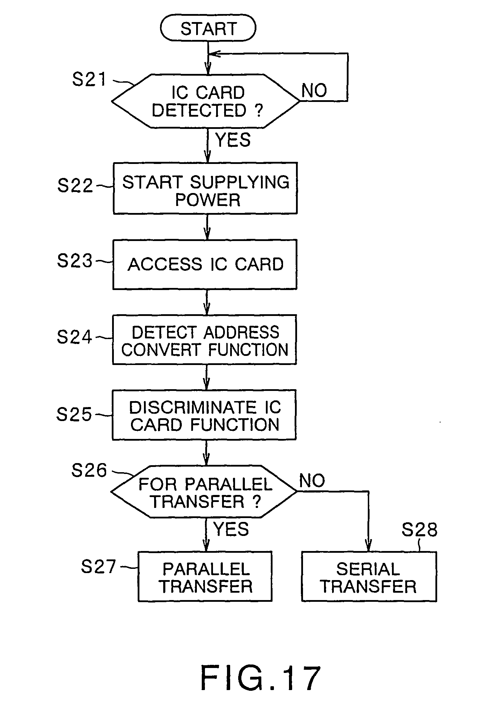

Next, operations made in the memory IC card for data read and write will be described with reference to FIG. 17. When the aforementioned memory IC card 7 is set in the mouse 5, the information processing apparatus 2 operates as will be described below with reference to FIG. 17. When the IC card 7 is set in the IC card receptacle 27 of the mouse 5 being connected by the USB interface to the information processing apparatus 2, the information processing apparatus 2 goes to step S21 where it will detect a potential at the IC card insertion detecting contacts and whether the potential is equal to that on the Vss contacts. When the potential at the IC card insertion detecting contacts is determined to be equal to that on the Vss contacts, the information processing apparatus 2 determines that the IC card is set in the IC card receptacle 27 of the mouse 5, and goes to step S22. If the potential at the IC card insertion detecting contacts is determined not to be equal to that on the Vss contacts, the information processing apparatus 2 determines that no IC card 7 is set in the IC card receptacle 27 of the mouse 5, and returns to step S21 where it will repeat the due operations.

In step S22, the information processing apparatus 2 starts supplying a power to the IC card 7 set in the mouse 5 via the interconnecting cable 30, and goes to step S23 where it will start accessing the IC card 7. At this time, supplied with the power supplied via the UBS interface from the information processing apparatus 2, the pilot lamp 29 on the mouse 5 is turned on. Thus, the user can visually confirm that the access to the IC card 7 is started. Then, the information processing apparatus 2 accesses a predetermined address in the memory 134 in the IC card 7. That is, the information processing apparatus 2 supplies a serial protocol bus state signal BS and serial clock SCLK to the IC card 7, and accesses the memory 134 to read IC card function ID data via a data line (DATA0) used in the serial transfer and parallel transfer.

In step S24, the information processing apparatus 2 judges based on address conversion ID data read from the memory 134 whether the IC card 7 set in the mouse 5 includes the address converter 136 or not. When the IC card 7 in the mouse 5 has the address conversion function, the information processing apparatus 2 will access the flash memory 131 by a logical address. When the IC card 7 set in the mouse 5 has no address conversion function, the information processing apparatus 2 will convert a logical address into a physical address by means of the address converter 136 provided in the mouse 5 and access, by a physical address, the flash memory 131 in the IC card 7 having no address conversion function.

Then the information processing apparatus 2 goes to step S25 where it will judge based on the IC card function ID data read from the memory 134 whether the IC card 7 set in the mouse 5 is a memory IC card. When the information processing apparatus 2 determines the IC card 7 set in the mouse 5 to be a memory IC card, it goes to step S26. If the information processing apparatus 5 determines the IC card 7 not to be any memory IC card, it makes operations corresponding to an IC card 7 having other function.

In step S26, the information processing apparatus 2 judges based on the communication ID data read from the memory 134 which the IC card 7 set in the mouse 5 is, a one for parallel transfer or a one only for serial transfer. When the information processing apparatus 2 determines the IC card 7 to be for parallel transfer, it goes to step S27. If it determines the IC card 7 to be a one only for serial transfer, it goes to step S28.

Having determined the IC card 7 set in the mouse 5 to be for parallel transfer, the information processing apparatus 2 switches the interface to the parallel interface 138 by means of the controller 139 in step S27 for parallel transfer of data to and from the flash memory 131. Then, the parallel data transfer is done along a first data line (DATA1), second data line (DATA2) and third data line (DATA3) of the parallel interface.

Having determined the IC card 7 set in the mouse 5 to be only for serial transfer, the information processing apparatus 2 switches the interface to the serial interface 137 by means of the controller 139 in step S28 for serial transfer of data to and from the flash memory 131. The serial data transfer is done along the data line (DATA0).

The access to the flash memory 131 in steps S27 and 28 has to be done by a physical address. On this account, when the IC card 7 has the address conversion function, the access to the flash memory 131 is done by converting a logical address into a physical address by means of the address converter 136 in the IC card 7. In case the IC card 7 has no address conversion function, the access to the flash memory 131 is done by converting a logical address into a physical address by means of the address converter 115 in the mouse 5. The memory IC card 7 stores, into the flash memory 131, data transferred from the information processing apparatus 2 to the flash memory 131 by the serial or parallel transfer, and data stored in the flash memory 131 is transferred to the information processing apparatus 2.

The mouse 5 having been described in the foregoing is capable of data transfer by two modes of communication; serial transfer and parallel transfer. Namely, it can send data to, and receive data from, a conventional IC card by the serial transfer, and also can rapidly send data to, and receive data from, a parallel transfer type IC card 7 by the parallel transfer. When the mouse 5 has a memory IC card 7 set therein, the information processing apparatus 2 can access to the memory IC card 7 by a logical address and make a rapid addressing since the IC card 7 includes the address converter 115.

In the foregoing, the present invention has been described in detail concerning certain preferred embodiments thereof as examples with reference to the accompanying drawings. However, it should be understood by those ordinarily skilled in the art that the present invention is not limited to the embodiments but can be modified in various manners, constructed alternatively or embodied in various other forms without departing from the scope and spirit thereof as set forth and defined in the appended claims.

### Industrial Applicability

As having been described in the foregoing, the input device includes a body in which an IC card is installable, and has the cover member installed to one main side of the body to be openable. The main side of the device body can be opened or closed by operating the cover member according to the type of an IC card set in the IC card receptacle. Thus the input device is usable easily and conveniently correspondingly to the type of an IC card set in the IC card receptacle.

## Claims

1. An input device comprising:
a device body to be connected to a host apparatus and including controls to control the host apparatus to which the device body is connected;
an IC card receptacle formed in the device body contiguously to an IC card insertion slot provided at a side of the device body;
a cover member provided over one main side of the device body to open and close the main side; and
an interface for data transfer between an IC card set in the IC card receptacle and the host apparatus.

2. The device as set forth in claim 1, wherein the cover member is pivotably installed by hinges to the device body.

3. The device as set forth in claim 1, wherein:
the IC card has a fingerprint detector provided one main side thereof; and
the device body has formed therein an opening through which the fingerprint detector on the IC card is exposed to outside when the IC card is set in the IC card receptacle.

4. The device as set forth in claim 1, wherein the interface sends and receives data to and from the host apparatus according to the USB (universal serial bus) standard.

5. The device as set forth in claim 1, wherein the cover member is transparent or semitransparent.

6. The device as set forth in claim 1, wherein the IC card receptacle has provided therein a lid forced in a direction of closing a connector which is to be electrically connected to a terminal block of the IC card.

7. The device as set forth in claim 1, wherein the IC card has a serial interface and/or a parallel interface.

8. The device as set forth in claim 1, wherein:
the device body includes an address conversion block to convert a logical address in data processing into a physical address in a memory when an IC card having the memory is set in the IC card receptacle; and
the address conversion block converts, when the host apparatus accesses the memory in the IC card by a logical address, the logical address into a physical address for access to the memory in the IC card.

9. The device as set forth in claim 1, wherein the IC card receptacle has provided therein an ejecting member which ejects an IC card to outside the IC card receptacle through the IC card insertion slot when the IC card is pressed in the direction in which the IC card is inserted.

10. The device as set forth in claim 1, wherein there is provided on one main side of the device body a pilot lamp which lights during access to the IC card.
